# EUROPEAN PATENT APPLICATION

(11) **EP 3 439 250 A1**
(43) Date of publication of application: **06.02.2019**
(21) Application number: 17775226.8
(22) Date of filing: 29.03.2017
(51) Int. Cl.: H04L 12/70, H04W 36/32

(54) **SLICE MANAGEMENT SYSTEM AND SLICE MANAGEMENT METHOD**

(30) Priority: 01.04.2016 JP 2016074607
(71) Applicant: NTT DOCOMO, INC., Chiyoda-ku Tokyo 100-6150 (JP)
(72) Inventor: SHIMOJOU Takuya, Tokyo 100-6150 (JP); SHIBAHARA Tomoki, Tokyo 100-6150 (JP); MINOKUCHI Atsushi, Tokyo 100-6150 (JP); SHIMIZU Masayoshi, Tokyo 100-6150 (JP); KHAN Ashiq, Tokyo 100-6150 (JP); OBANA Kazuaki, Tokyo 100-6150 (JP); THAKOLSRI Srisakul, Munich 80687 (DE); SAMA Malla Reddy, Munich 80687 (DE); KIESS Wolfgang, Munich 80687 (DE); TRIAY MARQUES Joan, Munich 80687 (DE)
(74) Representative: Viering, Jentschura & Partner mbB Patent- und Rechtsanwälte
(86) International application number: PCT/JP2017/012891
(87) International publication number: WO 2017/170692

(57) **Abstract**

A slice management system (1) is a system managing a slice that is a virtual network generated on a network infrastructure and includes a DNS (5) storing slice information relating to a slice to which a UE (2) can be connected for each area and determines whether or not the UE can, in a moving destination area that is a destination of movement of the UE (2) between areas, be connected to a slice to which the UE (2) was connected in a moving source area by referring to the DNS (5). In a case in which it is determined that the connection cannot be made, the slice management system (1) generates the slice in the moving destination area such that the UE (2) can be connected to the slice in the moving destination area.

## Description

### Technical Field

The present invention relates to a slice management system and a slice management method.

### Background Art

A network system using a conventional virtualization technology, by using a virtualization technology disclosed in Non-Patent Literature 1, generates slices that are virtual networks logically generated on a network infrastructure by virtually dividing hardware resources. By allocating services to the slices, the services can each be provided using networks of independent slices. Accordingly, in a case in which slices are allocated to services having various required conditions, the required conditions of each service can be easily satisfied, and the signaling processes and the like thereof can be reduced.

### Citation List

### Non Patent Literature

[Non-Patent Literature 1] Akihiro Nakao, "Virtualization-node project: Virtualization technology for new generation network," [online], July 2010, National Institute of Information and Communications Technology, [Accessed January 26, 2016], Internet <http://www.nict.go.jp/publication/NICT-News/1006/01.html>.

### Summary of Invention

### Technical Problem

In a case in which a slice is generated on a network infrastructure over areas using the virtualization technology described above, for each area, a terminal receiving a service provided by a slice is connected to the slice that is connectable in the area. Here, when the terminal is moving between areas, in other words, when the terminal moves from a moving source area to a moving destination area, there are cases in which a slice connected to the terminal in the moving source area is not generated in the moving destination area. In such a case, the terminal cannot be continuously connected in the moving destination area to the slice to which the terminal was connected in the moving source area. Accordingly, in the moving destination area, the terminal cannot receive a service that was provided in the moving source area.

The present invention is in view of such problems, and an object thereof is to provide a slice management system and a slice management method capable of providing a slice that is continuously connectable even when a terminal moves between areas.

### Solution to Problem

In order to solve the problems described above, according to one aspect of the present invention, there is provided a slice management system managing a slice that is a virtual network generated on a network infrastructure including a memory storing slice information relating to a slice to which a terminal can be connected for each area, and the slice management system: determines whether or not the terminal can, in a moving destination area that is a destination of movement of the terminal between areas, be connected to a slice to which the terminal was connected in a moving source area by referring to the memory; and generates the slice in the moving destination area such that the terminal can be connected to the slice in the moving destination area in a case in which it is determined that the connection cannot be made. By employing such a configuration, even in a case in which a terminal cannot be connected in a moving destination area that is a destination of movement of the terminal between areas to a slice to which it was connected in a moving source area, the slice is generated in the moving destination area, and accordingly, the terminal can be continuously connected to the slice in the moving destination area. In other words, a slice that can be continuously connected even when the terminal moves between areas can be provided.

In addition, in the slice management system according to one aspect of the present invention, determination of whether or not the terminal can be connected in the moving destination area to the slice to which the terminal was connected in the moving source area may be triggered by the terminal making a connection request for the slice in the moving destination area. By employing such a configuration, it may be determined whether or not the terminal can be connected in the moving destination area to the slice to which the terminal was connected in the moving source area when the terminal executes a connection request for the slice in the moving destination area as a trigger. In a case in which it is determined that the connection cannot be made, the slice is generated in the moving destination area. Accordingly, a slice that can be continuously connected even when a terminal moves between areas can be provided more reliably.

In addition, in the slice management system according to one aspect of the present invention, one area may be set as the moving source area, the adjacent area of the one area may be set as the moving destination area, and determination of whether or not the terminal can be connected in the moving destination area to the slice to which the terminal was connected in the moving source area may be triggered by movement of the terminal to the one area. By employing such a configuration, determination of whether or not the terminal can be connected in an adjacent area to a slice to which the terminal was connected in one area may be triggered by movement of the terminal to the one area. In a case in which it is determined that the connection cannot be made, the slice is generated in the adjacent area. Accordingly, a slice that can be continuously connected even when a terminal moves from one area to the adjacent area of the one area can be provided. In other words, before the terminal moves to a next area, the slice can be generated in the area in advance, and accordingly, a slice that can be continuously connected more reliably can be provided.

In addition, in the slice management system according to one aspect of the present invention, an area in which the terminal is currently located may be set as the moving source area, an area to which movement is predicted may be set as the moving destination area, and determination of whether or not the terminal can be connected in the moving destination area to a slice to which the terminal was connected in the moving source area may be triggered by prediction of movement of the terminal between areas based on at least one of location information, speed information, and acceleration information of the terminal. By employing such a configuration, determination of whether or not the terminal can be connected in an area to which movement is predicted to a slice to which the terminal is connected in an area in which it is currently located may be triggered by prediction of movement of the terminal between areas based on at least one of location information, speed information, and acceleration information of the terminal. In a case in which it is determined that the connection cannot be made, the slice is generated in an area to which movement is predicted. Accordingly, a slice that can be continuously connected even when a terminal moves from an area in which it is currently located to an area to which movement is predicted can be provided. In other words, before the terminal actually moves to a next area to which movement is predicted, the slice can be generated in the area in advance, and accordingly, a slice that can be continuously connected more reliably can be provided.

In addition, in the slice management system according to one aspect of the present invention, the slice information stored in the memory may include the number of terminals connected to a slice for each area, and the slice management system may delete a generated slice on the basis of the number of terminals included in the slice information stored in the memory. By employing such a configuration, for example, by deleting slices of which the number of connected terminals is zero, network resources required for maintaining slices can be saved.

In addition, in the slice management system according to one aspect of the present invention, when a slice is generated in the moving destination area, the slice may be generated only in a case in which it is determined that the generation of the slice can be executed on the basis of a resource status of the network infrastructure of the moving destination area. By employing such a configuration, a slice can be extended more reliably.

One aspect of the present invention may be described as an invention of a slice management method as below in addition to being described as an invention of the slice management system as described above. The inventions are substantially the same except for different categories, and thus similar operations and effects are exhibited.

In other words, according to one aspect of the present invention, there is provided a slice management method executed by a slice management system managing a slice that is a virtual network generated on a network infrastructure. The slice management method includes: a determination step of determining whether or not a terminal can, in a moving destination area that is a destination of movement of the terminal between areas, be connected to a slice to which the terminal was connected in a moving source area by referring to a memory storing slice information relating to a slice to which the terminal can be connected for each area; and a generation step of generating the slice in the moving destination area such that the terminal can be connected to the slice in the moving destination area in a case in which it is determined that the connection cannot be made.

### Advantageous Effects of Invention

A slice that can be continuously connected even when a terminal moves between areas can be provided.

### Brief Description of Drawings

Fig. 1 is a diagram illustrating a slice connection at the time of movement of a terminal between areas in a conventional technology.
Fig. 2 is a diagram illustrating a slice connection at the time of movement of a terminal between areas in a slice management system according to an embodiment of the present invention.
Fig. 3 is a system configuration diagram of a slice management system according to an embodiment of the present invention.
Fig. 4 is a diagram illustrating an example of a table of slice information stored in a memory (DNS).
Fig. 5 is a diagram illustrating an example of a table of the amounts of resources stored in memories (NFVO, VNFM, and VIM).
Fig. 6 is a diagram illustrating extension of a slice when a terminal moves.
Fig. 7 is a diagram illustrating an example of a table of terminal number information stored in a memory (SMF).
Fig. 8 is a diagram illustrating the hardware configuration of some devices (SSF) included in a slice management system according to an embodiment of the present invention.
Fig. 9 is a diagram illustrating the hardware configuration of some devices (SMF) included in a slice management system according to an embodiment of the present invention.
Fig. 10 is a flowchart illustrating a process executed in a slice management system (slice management method) according to an embodiment of the present invention.

### Description of Embodiments

Hereinafter, embodiments of a slice management system and a slice management method will be described in detail with reference to the drawings. In description of the drawings, the same reference signs will be assigned to the same elements, and duplicate description thereof will not be presented.

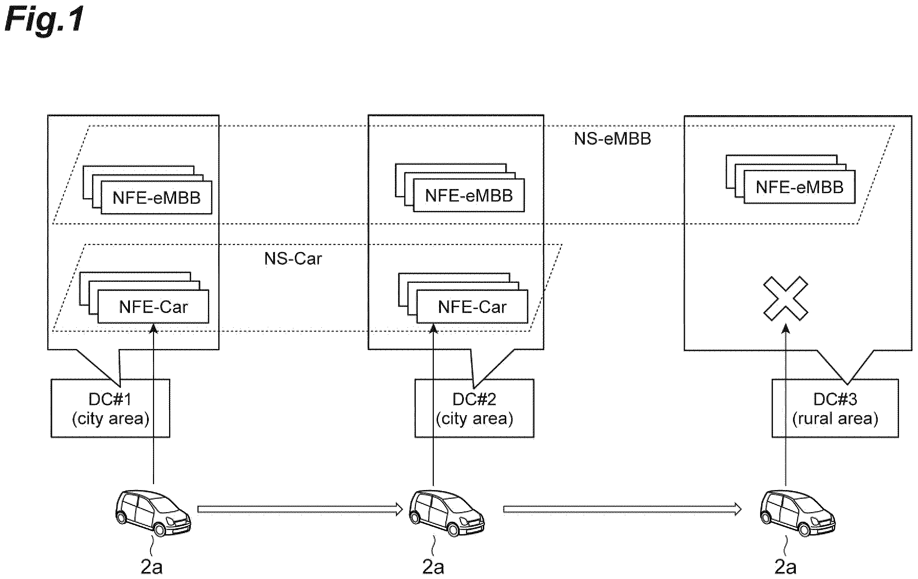

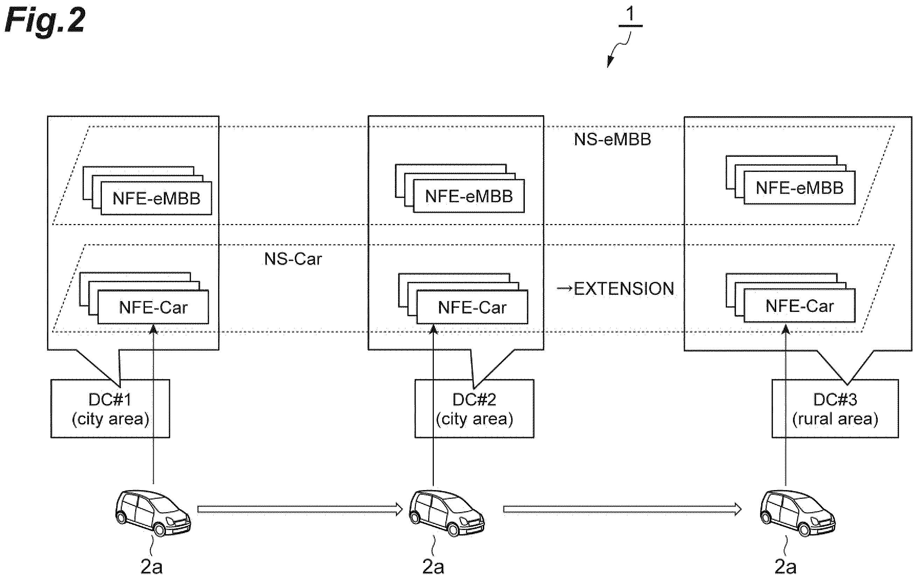

First, main differences between a conventional technology and a slice management system 1 according to an embodiment of the present invention will be described with reference to Figs. 1 and 2.

Fig. 1 is a diagram illustrating a slice connection at the time of movement of a terminal between areas in a conventional technology. As illustrated in Fig. 1, DC#1, DC#2, and DC#3 that are three data centers (DC) have bases at geographically different places. Each DC forms a slice over DCs using a network infrastructure included in the DC. A slice (or a network slice) is a virtual network or a service network logically generated on a network infrastructure by virtually dividing resources of links and nodes of a network apparatus and combining the divided resources, and thus the slices divide resources and do not interfere with each other. A service is a service using network resources such as a communication service (a dedicated line service or the like) or an application service (video delivery, a service using a sensor device such as an embedded device).

As illustrated in Fig. 1, DC#1 and DC#2 form a Network Slice (NS)-Car that is a slice over DC#1 and DC#2. In addition, the NS-Car includes a Network Function Entity (NFE)-Car that is a functional entity of a slice generated in each DC as its constituent element. The NS-Car provides an inter-car mobile communication service for a terminal (car). As service required conditions in the NS-Car, low latency and a local internal communication are required.

In addition, DC#1, DC#2, and DC#3 form an NS-evolved mobile broad band (eMBB) that is a slice over DC#1, DC#2, and DC#3. In addition, the NS-eMBB includes an NFE-eMBB that is a functional entity of a slice generated in each DC as its constituent element. The NS-eMBB has the same role as an existing mobile phone communication network and provides a mobile communication service enabling an Internet connection for a terminal. As a service required condition in the NS-eMBB, a delay and a frequency band that are of a level of an existing mobile phone communication network are required.

In addition, in this whole embodiment, a provision range of a mobile communication service provided by a slice formed by a network infrastructure included in each DC (a range in which a terminal can perform radio communication) will be referred to as an area. In addition, for the convenience of description, a DC may be referred to as an area. In Fig. 1, DC#1 and DC#2 are city areas, and DC#3 is a rural area. The NS-Car is formed (covered) in the city areas of DC#1 and DC#2 but is not formed (covered) in the rural area of DC#3. On the other hand, the NS-eMBB is widely formed in the city areas of DC#1 and DC#2 and the rural area of DC#3.

Fig. 1 illustrates a scenario in which a car 2a that is a terminal capable of accessing a mobile communication service provided by the NS-Car sequentially moves between areas of the city area of DC#1, the city area of DC#2, and the rural area of DC#3. First, the car 2a is connected to the NS-Car in the city area of DC#1 and, also after moving to the city area of DC#2, can be continuously connected to the NS-Car (of the city area of DC#2). However, upon moving to the rural area of DC#3 thereafter, the car 2a cannot be connected to the NS-Car since the NS-Car is not formed in the rural area of DC#3. In other words, in the conventional technology, the car 2a that has moved to the rural area of DC#3 in this way cannot be continuously connected to the NS-Car to which it was connected in the city areas of DC#1 and DC#2.

Fig. 2 is a diagram illustrating a slice connection at the time of movement of a terminal between areas in the slice management system 1. Description of the same content as illustrated in Fig. 1 will not be presented. When the car 2a moves to the rural area of DC#3, the slice management system 1 determines whether or not the car 2a is can be continuously connected to the NS-Car to which it was connected in the city area of DC#2. In a case in which it is determined that the connection cannot be made, the slice management system 1 forms the NS-Car also in DC#3 such that the car 2a is can be continuously connected to the NS-Car, thereby extending (generating and forming) the NS-Car. In addition, before the car 2a moves to the rural area of DC#3, the slice management system 1 may extend the NS-Car to DC#3 in advance. As above, in the slice management system 1, by extending the NS-Car, the car 2a that has moved to the rural area of DC#3 is can be continuously connected to the NS-Car to which it was connected in the city areas of DC#1 and DC#2.

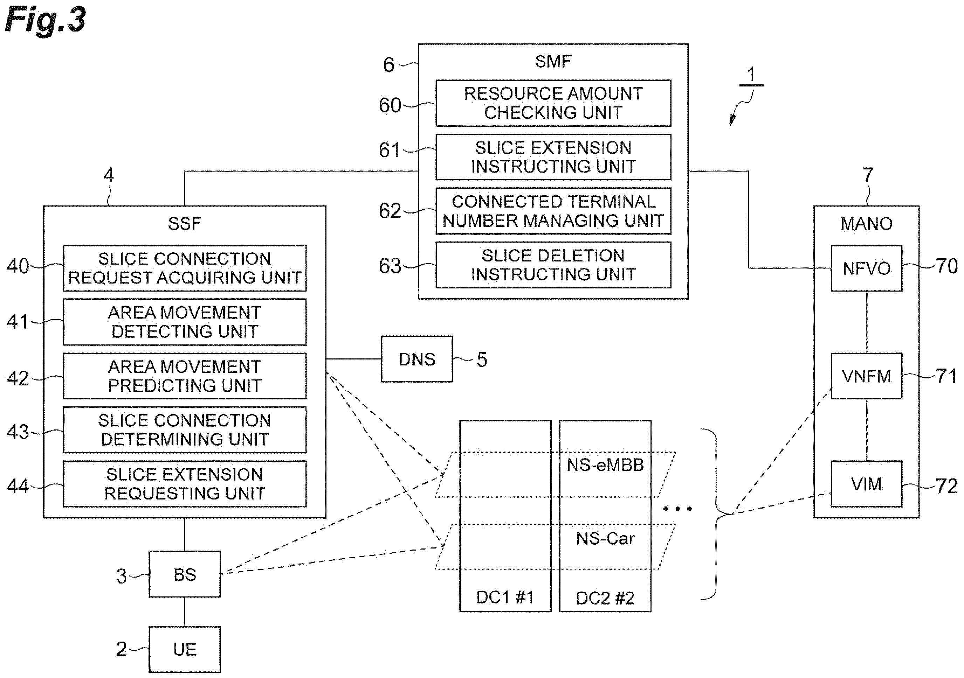

Next, details of the slice management system 1 will be described. Fig. 3 is a system configuration diagram of the slice management system 1. As illustrated in Fig. 3, the slice management system 1 (slice management system) is configured to include a user equipment (UE) 2 (terminal), a base station (BS) 3, a slice selection function (SSF) 4, a domain name system (DNS) 5 (memory), a service-slice mapping function (SMF) 6, and a management and orchestration (MANO) 7. In addition, the slice management system 1 may not include some of these constituent elements or may include other constituent elements.

In this embodiment, the slice management system 1 provides a communication function for the UE 2 that is a mobile communication terminal using a virtual server operating in a virtual machine realized on a physical server. In other words, the slice management system 1 is a virtualized mobile communication network. The communication function is provided for a mobile communication terminal by executing a communication process according to the communication function using a virtual machine. The slice management system 1 includes or may include constituent elements defined in 4G (fourth-generation mobile communication standard), 5G (fifth-generation mobile communication standard), a network functions virtualization (NFV) architecture, and the like, and description of details of such constituent elements will be appropriately omitted.

The UE 2 is a mobile communication terminal capable of performing mobile communication by being connected to a mobile communication network provided by the slice management system 1. In this embodiment, the UE 2 is a car having a mobile communication function. The UE 2 is connected to a slice managed (formed) by the slice management system 1 by transmitting a slice connection request that is information indicating a request for a connection to the slice to the BS 3 and can receive a service provided by the slice. When a slice connection request is transmitted, the UE 2 transmits the slice connection request with "UE Usage Type" and "Service Type" included therein as parameters used for designating a service requested to be received, in other words, a slice to which connection is requested, to the slice management system 1.

"UE Usage Type" is information representing "a terminal used for executing a certain service" set for each UE 2 or each user of the UE 2. Specific examples of "UE Usage Type" include "mobile phone" representing a mobile phone, car "car" (connected to a network), and the like.

"Service Type" is information that is set independently from "UE Usage Type" and is information storing "a certain service to be executed." Specific examples of "Service Type" include "voice call" indicating a voice communication service, "movie streaming" indicating a video streaming service, "eMBB" indicating an eMBB service, "intra car communication" indicating an inter-car communication service, and the like.

The UE 2 may include terminal identification information used for identifying the UE 2, cell identification information used for identifying a cell of the BS 3 in which the UE 2 is present, and the like in the slice connection request in addition to "UE Usage Type" and "Service Type." In addition, when moving across areas (when moving between areas), the UE 2 transmits a slice connection request (to a BS 3 of a moving destination area) in a moving destination area.

The BS 3 is a general base station. When a slice connection request is received from the UE 2, the BS 3 transmits the received slice connection request to the SSF 4. When a received slice connection request is transmitted to the SSF 4, the BS 3 may transmit the slice connection request with cell identification information used for identifying a cell of the BS 3 in which the UE 2 that has transmitted the slice connection request is present and the like included therein.

The BS 3 receives slice connection destination information relating to a slice that is a connection destination of the UE 2 or connection destination error information indicating that a slice that is a connection destination cannot be determined as a response to the transmission of a slice connection request to the SSF 4. In a case in which the slice connection destination information is received from the SSF 4, the BS 3 connects the UE 2 that has transmitted the slice connection request to a slice represented by the received slice connection destination information. On the other hand, in a case in which the connection destination error information is received from the SSF 4, the BS 3 transmits the received connection destination error information to the UE 2. In addition, when the connection destination error information is received, the UE 2 determines that a connection to a slice cannot be made.

The SSF 4 is an independent node (a server device or the like). When a slice connection request is received from the BS 3, the SSF 4 determines a slice to which the UE 2 that has transmitted the slice connection request is to be connected on the basis of the received slice connection request, and in a case in which a slice that is a connection destination is determined, transmits slice connection destination information relating to the slice that is the connection destination to the BS 3. In a case in which a slice that is the connection destination cannot be determined, the connection destination error information representing an indication thereof is transmitted to the BS 3. Details of the SSF 4 (functional blocks illustrated in Fig. 3) will be described later.

The DNS 5 is a node that provides a service of a general DNS. The DNS 5 stores slice information relating to a slice to which the UE 2 can be connected for each area managed in the slice management system 1. The slice information includes DC identification information used for identifying a DC to which a slice is provided, cell identification information used for identifying a cell in the DC to which the slice is provided, slice identification information used for identifying the slice, and an IP address of the slice. In addition, the slice information may be associated with each "UE Usage Type" and "Service Type."

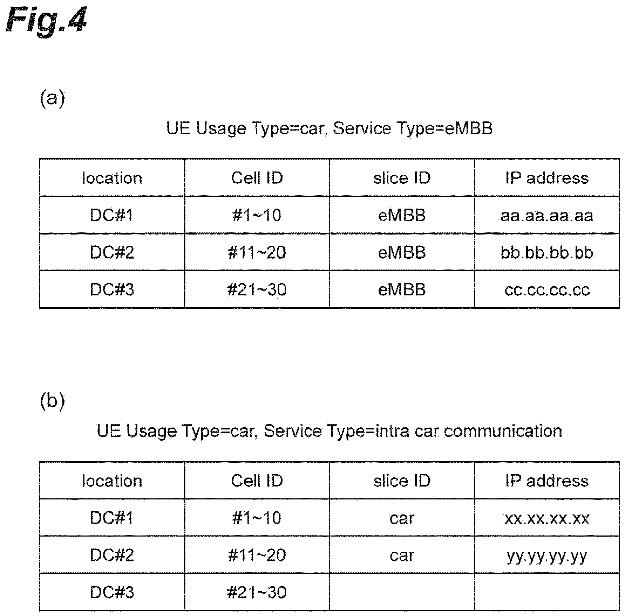

Fig. 4 is a diagram illustrating an example of a table of slice information stored in the DNS 5. In slice information illustrated in Fig. 4(a), "UE Usage Type" is "car," "Service Type" is associated with "eMBB," and a slice represented by the slice information represents a slice used for a car to execute the eMBB service. In addition, a first record in the example of the table illustrated in Fig. 4(a) represents that a slice of which the slice identification information is "eMBB" is formed in cells #1 to #10 of DC#1, and an IP address thereof is "aa.aa.aa.aa." Similarly, in slice information illustrated in Fig. 4(a), "UE Usage Type" is "car," "Service Type" is associated with "intra car communication," and a slice represented by the slice information represents a slice used for a car to execute an inter-car communication service. In addition, a third record in the example of the table illustrated in Fig. 4(b) represents that a slice used for a car to execute the inter-car communication service is not formed (provided) in cells #11 to #30 of DC#3.

Referring back to Fig. 3, the SMF 6 is a node that performs management of slices or performs determination in the SSF 4 on the basis of a service required condition, a resource use status of a slice, and the like. Details of the SMF 6 (functional blocks illustrated in Fig. 3) will be described later.

The MANO 7 is an architecture used for managing resources relating to slices. As illustrated in Fig. 3, the MANO 7 is configured to include an NFVO 70, a VNFM 71, and a VIM 72.

The NFVO 70 is a node that manages the VNFM 71 and the VIM 72 and performs generation/extension/removal of a slice and acquisition of a resource operation status in accordance with an instruction from the SMF 6. The VNFM 71 is a node that performs resource management of software resources of slices in a DC. The VIM 72 is a node that performs resource management of physical and logical hardware resources of slices in a DC.

For example, when a slice generation instruction that is information indicating an instruction for generating a slice is received from the SMF 6, the NFVO 70 causes the VNFM 71 and the VIM 72 to acquire resources on a corresponding DC, configures an NFE for a slice on the DC, and generates a slice. On the other hand, for example, when a slice extension instruction that is information indicating an instruction for extending a slice is received from the SMF 6, the NFVO 70 causes the VNFM 71 and the VIM 72 to acquire resources on a corresponding DC, configures an NFE for a slice on the DC, and extends the slice. In addition, when a slice removal instruction that is information indicating removal of a slice is received from the SMF 6, the NFVO 70 causes the VNFM 71 and the VIM 72 to remove an NFE for a slice on a corresponding DC, releases resources on the DC, and removes the slice. Here, the NFE configured on the DC may be configured to be divided into an NFE for a U-Plane and an NFE for a C-Plane.

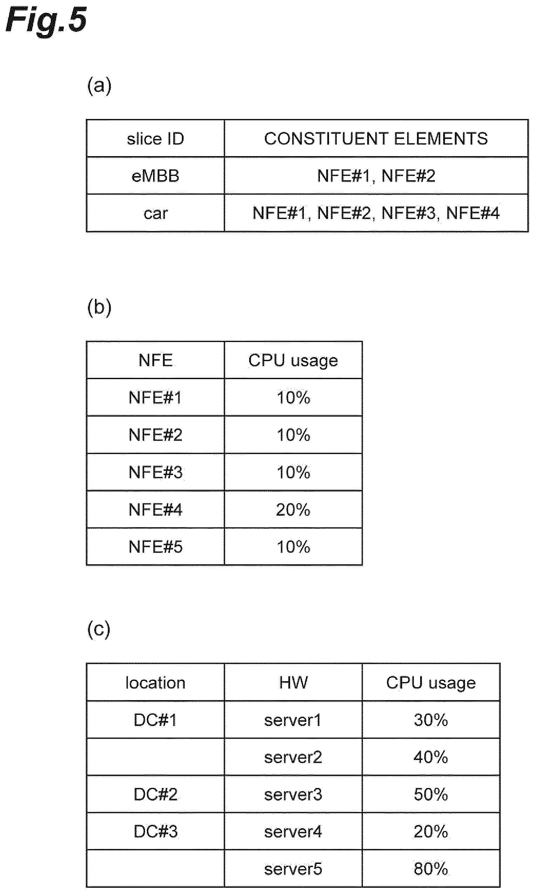

Fig. 5 is a diagram illustrating an example of a table of the amount of resources stored in the NFVO 70, the VNFM 71, and the VIM 72. Fig. 5(a) is an example of a table of the amount of resources stored in the NFVO 70. In the example of the table illustrated in Fig. 5(a), slice identification information and identification information of constituent elements (identification information of NFEs) of a slice represented by the slice identification information are associated with each other. Fig. 5(b) is an example of a table of the amount of resources stored in the VNFM 71. In the example of the table illustrated in Fig. 5(b), identification information of an NFE that is a constituent element of a slice and the CPU usage ratio of the NFE are associated with each other. Fig. 5(c) is an example of a table of the amount of resources stored in the VIM 72. In the example of the table illustrated in Fig. 5(c), DC identification information used for identifying a DC, identification information of hardware present in the DC, and the CPU usage ratio of the hardware are associated with each other.

In addition, by transmitting a resource operation status acquiring instruction that is information indicating instructing each of the NFVO 70, the VNFM 71, and the VIM 72 to acquire a resource operation status, the SMF 6 acquires the table of the amount of resources stored in each of the NFVO 70, the VNFM 71, and the VIM 72 as responses thereof, and stores the acquired tables in the SMF 6. By regularly transmitting a resource operation status acquiring instruction, the SMF 6 stores the latest amounts of resources of the NFVO 70, the VNFM 71, and the VIM 72 in the SMF 6 and determines whether or not a slice can be built on a specific DC on the basis of the stored latest amounts of resources and the like.

One or more of the BS 3, the SSF 4, the DNS 5, the SMF 6, the NFVO 70, the VNFM 71, and the VIM 72 included in the slice management system 1 described above may be realized by a physical server device or the like as described above or may be realized by executing a program on a physical server device. In addition, two or more of the BS 3, the SSF 4, the DNS 5, the SMF 6, NFVO 70, the VNFM 71, and the VIM 72 may be realized by one physical server device or the like or may be realized by executing a program on one physical server device. In addition, the SSF 4 may be configured from a mobility management entity (MME), a home subscribed server (HSS), and a DNS in a third generation partnership project (3GPP).

Subsequently, each functional block of the SSF 4 illustrated in Fig. 3 will be described.

A slice connection request acquiring unit 40 receives (acquires) a slice connection request from the UE 2 through the BS 3 and transmits the received slice connection request to a slice connection determining unit 43.

As area movement detecting unit 41 detects movement of the UE 2 to one area (movement to one area from an area different from the one area). For example, the area movement detecting unit 41 inquires an HSS (not illustrated in the drawing) using terminal identification information included in the slice connection request as an argument, acquires a history of in-service-area information of a UE 2 managed by the HSS and location information of each area, and detects movement of the UE 2 to one area on the basis of the acquired information. When the movement of the UE 2 to one area is detected, the area movement detecting unit 41 transmits a result of the detection to the slice connection determining unit 43.

An area movement predicting unit 42 predicts movement of a UE 2 between areas on the basis of at least one of location information, speed information, and acceleration information of the UE 2. For example, the area movement predicting unit 42 regularly acquires at least one of the location information, the speed information, and the acceleration information of the UE 2 from the BS 3, inquires an HSS (not illustrated) using the terminal identification information included in the slice connection request as an argument, acquires a history of the in-service-area information of each UE 2 managed by the HSS and the location information of each area, and predicts the movement of the UE 2 between areas on the basis of the acquired information. When the movement of the UE 2 between areas is predicted, the area movement predicting unit 42 transmits a result of the prediction to the slice connection determining unit 43.

The slice connection determining unit 43 determines whether or not the UE 2 can be connected in a moving destination area to a slice to which it was connected in a moving source area when the UE 2 is moving between areas on the basis of the slice information stored in the DNS 5. The slice connection determining unit 43 performs the determination by being triggered upon reception of a slice connection request from the slice connection request acquiring unit 40, being triggered upon reception of a result of detection from the area movement detecting unit 41, or being triggered upon reception of a result of the prediction from the area movement predicting unit 42. Hereinafter, each of the cases will be described more specifically.

In a case in which the slice connection determining unit 43 receives a slice connection request from the slice connection request acquiring unit 40 as the first trigger, by comparing "UE Usage Type," "Service Type," and the cell identification information included in a slice connection request received in the previous time from a UE 2 represented by the terminal identification information included in the received slice connection request with those included in the slice connection request received this time, the slice connection determining unit 43 determines whether or not the UE 2 is moving between areas and whether or not the UE 2 attempts to be connected to the same slice as that of the previous time. In addition, in order to make a comparison with the slice connection request received in the previous time, the SSF 4 sores a history of past slice connection requests. In a case in which the UE 2 is moving between areas and is attempting to be connected also in a moving destination area to a slice to which it was connected in a moving source area, the slice connection determining unit 43 inquiries about an IP address of the slice requested to be connected from the UE 2 by making a DNS query to the DNS 5 using "UE Usage Type," "Service Type," and the cell identification information included in the slice connection request received this time as arguments.

For example, in a case in which a table of the slice information stored in the DNS 5 is the table illustrated in Fig. 4, "UE Usage Type" included in the slice connection request is "car," "Service Type" is "eMBB," and the cell identification information is "#22," it corresponds to the third record of the table illustrated in Fig. 4(a), and thus, the slice connection determining unit 43 receives an IP address "cc.cc.cc.cc" as a DNS response from the DNS 5. In this way, in a case in which an IP address of the slice requested to be connected from the UE 2 has been acquired, the slice connection determining unit 43 determines that the UE 2 can be connected in a moving destination area to the slice to which it was connected in a moving source area when the UE 2 is moving between areas. Subsequently, the slice connection determining unit 43 returns the acquired IP address to the BS 3 and connects the UE 2 to a slice represented by the IP address.

In addition, in a case in which "UE Usage Type" included in the slice connection request is "car," "Service Type" is "intra car communication," and the cell identification information is "#28," it corresponds to the third record of the table illustrated in Fig. 4(b), but a slice corresponding to DC#3 is not present (in a case in which the slice identification information and the IP address are blank, it represents that the slice is not present). In such a case, the slice connection determining unit 43 receives information indicating that a slice to be connected is not present as a DNS response from the DNS 5. In this way, in a case in which a slice requested to be connected from the UE 2 is not present, the slice connection determining unit 43 determines that the UE 2 cannot be connected in a moving destination area to the slice to which it was connected in a moving source area, in a case in which the UE 2 is moving between areas. In a case in which it is determined that the UE 2 cannot be connected, the slice connection determining unit 43 transmits "UE Usage Type," "Service Type," and the cell identification information included in the received slice connection request to a slice extension requesting unit 44.

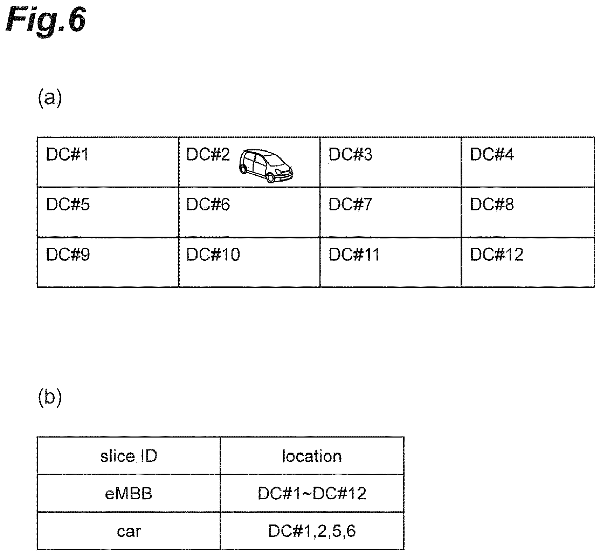

In a case in which the slice connection determining unit 43 receives a result of detection from the area movement detecting unit 41 as the second trigger, the slice connection determining unit 43 sets one area in which the movement has been detected as a moving source area and sets the adjacent area of the one area as a moving destination area and determines whether or not a target UE 2 can be connected in the moving destination area to slice to which it was connected in the moving source area. Here, the SMF 6 is assumed to store examples of tables illustrated in Figs. 6(a) and 6(b) in advance. Fig. 6(a) is an example of a table representing an adjacent relation (locational relation) of areas. For example, in a case in which a moving source area (one area) is DC#2, the slice connection determining unit 43 acquires the example of the table illustrated in Fig. 6(a) by making an inquiry to the SMF 6 and determines moving destination areas (adjacent areas) to be DC#1, DC#3, DC#5, DC#6, and DC#7 adjacent to DC#2 on the basis of the acquired example of the table. Fig. 6(b) is an example of a table representing an area in which a certain slice managed by the slice management system 1 is present. For example, in a case in which identification information of a slice to which the UE 2 is connected in DC#2 that is a moving source area is "car" (the identification information is acquired through an inquiry to an HSS not illustrated in the drawing), the slice connection determining unit 43 determines that a continuous connection to a slice of which the identification information is "car" can be made for DC#1, DC#5, and DC#6 and determines that a connection thereto cannot be made for DC#3 and DC#7 among DC#1, DC#3, DC#5, DC#6, and DC#7 that are moving destination areas on the basis of the example of the table illustrated in Fig. 6(b). The slice connection determining unit 43 transmits the identification information of each area for which it is determined that a connection cannot be made and the identification information of the slice to which the UE 2 is connected in the moving source area to the slice extension requesting unit 44.

In a case in which the slice connection determining unit 43 receives a result of prediction from the area movement predicting unit 42 as the third trigger, the slice connection determining unit 43 sets an area in which a target UE 2 is currently located as a moving source area, sets an area in which movement is predicted as a moving destination area, and determines whether or not the terminal can be connected in the moving destination area to the slice to which it was in the moving source area. The method of determination is similar to that of the case of the second trigger described above. The slice connection determining unit 43 transmits identification information of an area for which it is determined that a connection cannot be made and identification information of the slice to which the UE 2 is connected in the moving source area to the slice extension requesting unit 44.

The slice extension requesting unit 44 receives "UE Usage Type," "Service Type," and the cell identification information received from the slice connection determining unit 43 or the identification information of the areas and the identification information of the slice and transmits a slice extension request indicating extension (generation and formation) of a slice corresponding to the corresponding cell or area to the SMF 6 on the basis of the received information. The slice extension requesting unit 44 may include the information received from the slice connection determining unit 43 in the slice extension request. The slice is extended to the moving destination area on the basis of the transmission of the slice extension request from the slice extension requesting unit 44 such that the UE 2 can be connected to the slice in the moving destination area using the SMF 6 and the MANO 7.

Next, each functional block of the SMF 6 illustrated in Fig. 3 will be described.

When a slice extension request is received from the slice extension requesting unit 44 of the SSF 4, a resource amount checking unit 60 checks whether or not resources required for extending a slice represented in the slice extension request in a cell or an area represented in the slice extension request can be secured. For example, the resource amount checking unit 60, as described above, checks whether the securing described above can be made on the basis of the table of the amount of resources stored in the SMF 6. In addition, the resource amount checking unit 60 may check an NFE required for extending the slice. In a case in which it is checked that the securing can be made, the resource amount checking unit 60 transmits the received slice extension request to a slice extension instructing unit 61. On the other hand, in a case in which it is checked that the securing cannot be made, in other words, in a case in which it is determined that extension of the slice cannot be made, the resource amount checking unit 60 transmits error information indicating that the slice cannot be extended to the SSF 4.

The slice extension instructing unit 61 transmits a slice extension instruction indicating to instruct the extension of the slice to the MANO 7 (or the NFVO 70) on the basis of the information included in the received slice extension request. In other words, the slice extension instructing unit 61 transmits a slice extension instruction indicating to instruct extension of a slice only in a case in which it is determined that the slice can be extended on the basis of the resource status of the network infrastructure of the moving destination area. In addition, the process of extending a slice in the MANO 7 is similar to a process using a conventional technology, and thus description thereof will not be presented. According to the extension (generation and formation) of a slice using the MANO 7, the tables of the amounts of resources stored in the NFVO 70, the VNFM 71, and the VIM 72 illustrated in Fig. 5 are updated, and the slice information of the DNS 5 is updated. In addition, by causing an NFE generated for the extension of a slice to belong to another slice, the MANO 7 may cause a newly generated slice to belong to another slice instead of being extended.

When the process of extending a slice in the MANO 7 normally ends, the slice extension instructing unit 61 receives slice extension completion information indicating the completion of slice extension from the MANO 7 (or the NFVO 70). In the slice extension completion information, information of the extended slice is included. The slice extension instructing unit 61 that has received the slice extension completion information transmits information of an extended slice included in the received slice extension completion information to the SSF 4. In addition, the SSF 4 that has received the information performs an DNS query for slice information of the DNS 5 (that has been updated) on the basis of the received information acquires an IP address of the extended slice, and instructs the BS 3 to connect the UE 2 to the slice represented by the IP address.

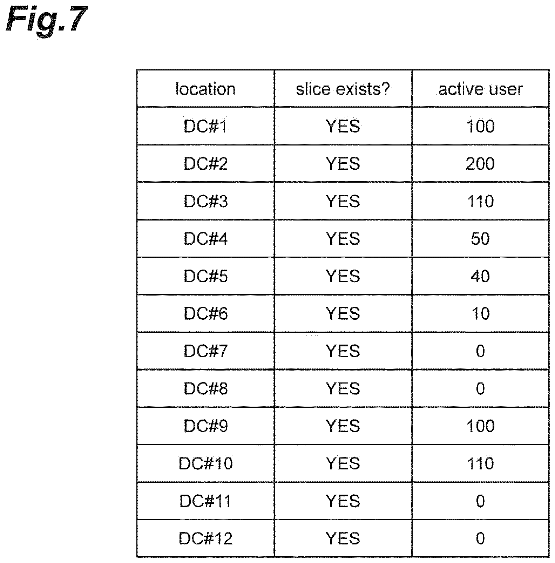

A connected terminal number managing unit 62 stores (manages) slice information including the number of terminals connected to a slice for each area. Fig. 7 is a diagram illustrating an example of a table of slice information stored in the SMF 6. The example of the table illustrated in Fig. 7 is a table for a specific slice and includes area identification information ("location" column) used for identifying an area, information representing whether or not the slice is present in the area ("slice exist" column), and the number of UEs 2 connected to the slice in the area ("active user" column). In addition, the slice information described above may be included in the DNS 5.

A slice deletion instructing unit 63 deletes an extended slice on the basis of the number of UEs 2 connected to the slice for each area that is included in the slice information stored by the connected terminal number managing unit 62. For example, the slice deletion instructing unit 63 deletes slices of areas in which the number of connected UEs 2 is zero in the example of the table illustrated in Fig. 7. The slice deletion instructing unit 63 may delete slices of areas in which the number of the connected UEs 2 is a predetermined number or less. In addition, in the example of the table illustrated in Fig. 7, information representing whether or not a slice of each area is extended by the slice management system 1 may be further included, and, when slices are to be deleted, the slice deletion instructing unit 63 may delete only extended slices by referring to the information. In a case in which the slice information described above is included in the DNS 5, the slice deletion instructing unit 63 inquires the DNS 5 for acquiring the slice information.

The functional blocks of the SSF 4 and the SMF 6 illustrated in Fig. 3 have been described above.

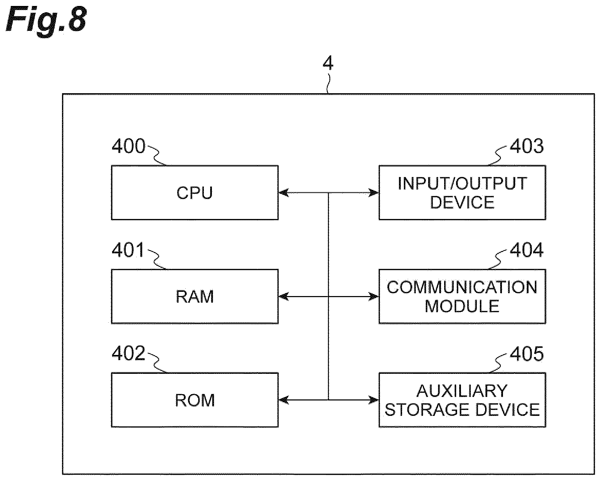

Here, the SSF 4 is configured from hardware such as a CPU and the like. Fig. 8 is a diagram illustrating an example of the hardware configuration of the SSF 4. The SSF 4 illustrated in Fig. 3, as illustrated in Fig. 8, is physically configured as a computer system including one or a plurality of CPUs 400, a RAM 401 and a ROM 402 that are main storage devices, an input/output device 403 such as a display and the like, a communication module 404, an auxiliary storage device 405, and the like.

The function of each functional block of the SSF 4 illustrated in Fig. 3 is realized by operating the input/output device 403, the communication module 404, and the auxiliary storage device 405 under the control of the CPU 400 and executing reading/writing data from/in the RAM 401 by reading predetermined computer software onto hardware such as the CPU 400, the RAM 401, and the like illustrated in Fig. 8.

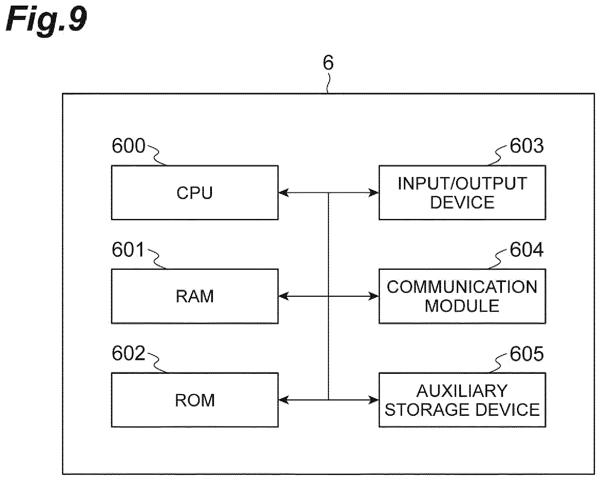

Similarly, the SMF6 is configured from hardware such as a CPU and the like. Fig. 9 is a diagram illustrating one example of the hardware configuration of the SMF 6. The SMF 6 illustrated in Fig. 3, as illustrated in Fig. 9, is physically configured as a computer system including one or a plurality of CPUs 600, a RAM 601 and a ROM 602 that are main storage devices, an input/output device 603 such as a display and the like, a communication module 604, an auxiliary storage device 605, and the like.

The function of each function of the SMF 6 illustrated in Fig. 3 is realized by operating the input/output device 603, the communication module 604, and the auxiliary storage device 605 under the control of the CPU 600 and executing reading/writing data from/in the RAM 601 by reading predetermined computer software onto hardware such as the CPU 600, the RAM 601, and the like illustrated in Fig. 9.

In addition, instead of executing each function illustrated in Fig. 3 using a processor such as the CPU 400, the CPU 600, or the like, by building all or some of the functions using a dedicated integrated circuit (IC), each function may be configured to be executed. For example, by building a dedicated integrated circuit used for performing image processing or communication control, the functions described above may be executed.

Software should be broadly interpreted to mean a command, a command set, a code, a code segment, a program code, a program, a subprogram, a software module, an application, a software application, a software package, a routine, a subroutine, an object, an executable file, an executable thread, a sequence, a function, and the like regardless whether it is called software, firmware, middleware, a microcode, or a hardware description language or any other name.

In addition, software, a command, or the like may be transmitted and received through a transmission medium. For example, in a case in which software is transmitted from a web site, a server, or any other remote source using a wired technology such as a coaxial cable, an optical fiber cable, a twisted pair or a digital subscriber line (DSL) and/or a wireless technology such as an infrared ray, radio, or a microwave, the such a wired technology and/or a wireless technology are included in the definition of the transmission medium.

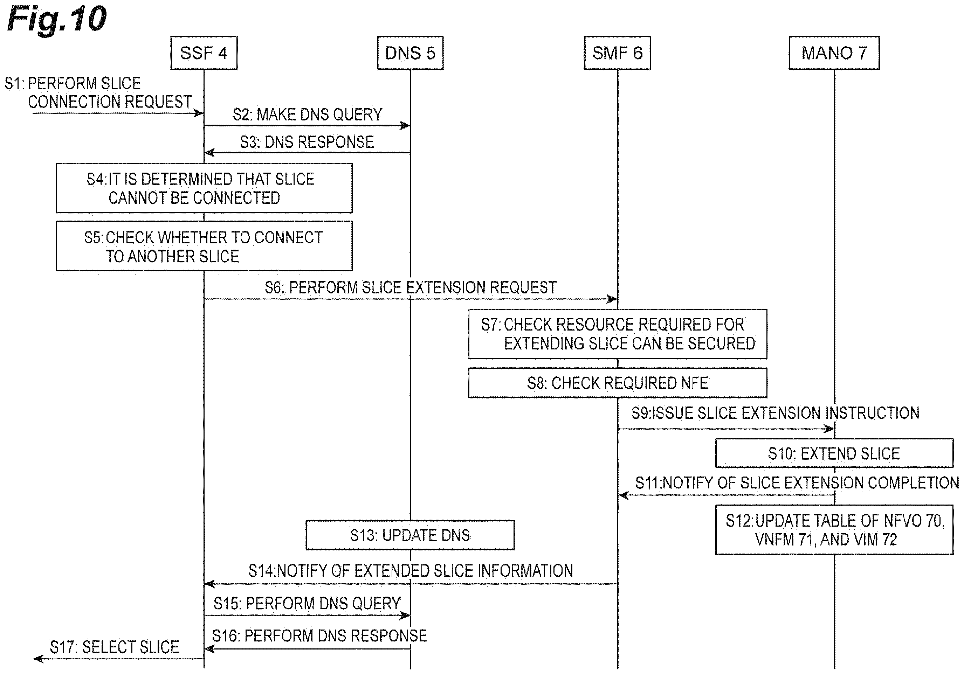

Next, a main process of a slice management method in the slice management system 1 will be described with reference to a flowchart illustrated in Fig. 10.

First, a slice connection request is acquired by the slice connection request acquiring unit 40 of the SSF 4 (Step S1). Next, a DNS query is made for the DNS 5 using the slice connection determining unit 43 (Step S2), and a DNS response is acquired as a response thereof (Step S3). Next, it is determined by the slice connection determining unit 43 whether or not a UE 2 can be connected in a moving destination area to a slice to which it was connected in a moving source area on the basis of the DNS response acquired in S3 (determination step), and here, it is assumed to be determined that the UE 2 cannot be connected to the slice (Step S4). Next, by using the SSF 4, it is checked whether the UE 2 is to be connected to another slice by referring to a priority list, in which connection destinations of slices are aligned in order of priority levels, stored in the SSF 4 or the like (Step S5). Here, it is assumed to be checked that the UE 2 is not connected to another slice. Next, a slice extension request is transmitted to the SMF 6 by the slice extension requesting unit 44 (Step S6).

Next, it is checked whether or not resources required for extending the slice can be secured using the resource amount checking unit 60 of the SMF 6 (Step S7). Here, it is assumed to be checked that the resources can be secured. Next, an NFE required for extending the slice is checked using the resource amount checking unit 60 (Step S8). Next, a slice extension instruction is transmitted to the MANO 7 by the slice extension instructing unit 61 (Step S9). Next, by using the MANO 7, the slice is extended (Step S10; generation step), and slice extension completion information is transmitted to the SMF 6 (Step S11). In addition, after S10, tables stored in the NFVO 70, the VNFM 71, and the VIM 72 are updated (Step S12), and the DNS 5 is updated (Step S13), whereby the information of the extended slice is reflected. Next, the information of the extended slice is notified to the SSF 4 using the slice extension instructing unit 61 (Step S14).

Next, a DNS query is made for the DNS 5 using the slice extension requesting unit 44 of the SSF 4 (Step S15), and a DNS response is acquired as a response thereof (Step S16), whereby an IP address of the extended slice is acquired. Next, the BS is instructed to perform slice selection based on the IP address acquired for the BS 3 using the slice extension requesting unit 44 (Step S 17).

Next, operations and effects of the slice management system 1 configured as in this embodiment will be described.

According to the slice management system 1 of this embodiment, even in a case in which the UE 2 cannot be connected in a moving destination area to a slice to which it was connected in a moving source area when the UE 2 is moving between areas, the slice is extended to the moving destination area. Accordingly, the UE 2 can be continuously connected to the slice in the moving destination area. In other words, a slice that can be continuously connected even when the UE 2 is moving between areas can be provided.

In addition, according to the slice management system 1 of this embodiment, it is determined whether or not the UE 2 can be connected in the moving destination area to a slice to which it was connected in the moving source area by being triggered upon execution of a connection request for the slice in the moving source area when the UE 2 is moving between areas. In a case in which it is determined that the connection cannot be made, the slice is extended to the moving destination area. Accordingly, a slice that can be continuously connected even when the UE 2 is moving between areas can be provided more reliably.

In addition, according to the slice management system 1 of this embodiment, it is determined whether or not the UE 2 can be connected in an adjacent area to a slice to which it was connected in one area by being triggered upon the movement of the UE 2 to the one area. In a case in which it is determined that the connection cannot be made, the slice is extended to the adjacent area. In this way, a slice that can be continuously connected even when the UE 2 moves from one area to the adjacent area of the one area can be provided. In other words, before the UE 2 moves to a next area, the slice can be extended to the area in advance, and accordingly, a slice that can be continuously connected more reliably can be provided.

In addition, according to the slice management system 1 of this embodiment, it is determined whether or not the UE 2 can be connected in an area to which the movement is predicted to a slice to which it is connected in a currently-located area by being triggered upon prediction of the movement of the UE 2 between areas on the basis of at least one of the location information, speed information, and the acceleration information of the UE 2. In a case in which it is determined that the connection cannot be made, the slice is extended to the area to which the movement is predicted. In this way, a slice that can be continuously connected even when the UE 2 moves from a currently-located area to an area to which the movement is predicted can be provided. In other words, before the UE 2 actually moves to an area to which next movement is predicted, the slice can be extended to the area in advance, and accordingly, the slice that can be continuously connected more reliably can be provided.

In addition, according to the slice management system 1 of this embodiment, for example, by deleting slices of which the number of connected UEs 2 is zero, network resources required for maintaining slices can be saved.

Furthermore, according to the slice management system 1 of this embodiment, when a slice is to be extended to a moving destination area, the slice is extended only in a case in which it is determined that the extension of the slice can be made on the basis of the resource status of the network infrastructure of the moving destination area, and accordingly, the slice can be extended more reliably.

The information and the like described in this specification may be represented using any one of various other technologies. For example, data, instructions, commands, information, signals, bits, symbols, chips, and the like mentioned over the whole description presented above may be represented using a voltage, a current, an electromagnetic wave, a magnetic field or a magnetic particle, an optical field or a photon, or an arbitrary combination thereof.

Description of "on the basis of' used in this specification does not mean "only on the basis of" unless otherwise mentioned. In other words, description of "on the basis of" means both "only on the basis of" and "at least on the basis of."

"Unit" in the configuration of each device described above may be substituted with "means," "circuit," "device," or the like.

As long as "include," "including," and a variation thereof are used in this specification or the claims, such terms are intended to be understood as being inclusive like a term "comprise." In addition, a term "or" used in this specification or the claims is intended not to be exclusive OR.

The processing order, the sequence, the flowchart, and the like of each aspect/embodiment described in this specification may be changed in order as long as there is no contradiction. For example, in the method described in this specification, elements of various steps are presented in an exemplary order, and the order is not limited to the presented specific order.

Aspects/embodiments described in this specification may be used independently, be combined to be used, or be used to be switched over in accordance with the execution. In addition, a notification (for example, a notification of "being X") of predetermined information is not limited to be performed explicitly and may be performed implicitly (for example, a notification of predetermined information is not performed).

In this whole disclosure, a singular form is assumed to include a plural form unless it is clearly mentioned in the context. Thus, for example, in terms of "device," a case of a single device and a case of a plurality of such devices are included.

As above, while the present invention has been described in detail, it is apparent to a person skilled in the art that the present invention is not limited to the embodiments described in this specification. The present invention may be modified or changed without departing from the concept and the scope of the present invention set in accordance with the claims. Thus, the description presented in this specification is for the purpose of exemplary description and does not have any limited meaning for the present invention.

### Reference Signs List

1 slice management system
2 UE
3 BS
4 SSF
5 DNS
6 SMF
7 MANO
40 slice connection request acquiring unit
41 area movement detecting unit
42 area movement predicting unit
43 slice connection determining unit
44 slice extension requesting unit
60 resource amount checking unit
61 slice extension instructing unit
62 connected terminal number managing unit
63 slice deletion instructing unit
70 NFVO
71 VNFM
72 VIM

## Claims

1. A slice management system managing a slice that is a virtual network generated on a network infrastructure, the slice management system comprising:
a memory storing slice information relating to a slice to which a terminal can be connected for each area,
wherein the slice management system:
determines whether or not the terminal can, in a moving destination area that is a destination of movement of the terminal between areas, be connected to a slice to which the terminal was connected in a moving source area by referring to the memory; and
generates the slice in the moving destination area such that the terminal can be connected to the slice in the moving destination area in a case in which it is determined that the connection cannot be made.

2. The slice management system according to claim 1, wherein determination of whether or not the terminal can be connected in the moving destination area to a slice to which the terminal was connected in the moving source area is triggered by the terminal executing a connection request for the slice in the moving destination area.

3. The slice management system according to claim 1, wherein one area is set as the moving source area, an adjacent area of the one area is set as the moving destination area, and determination of whether or not the terminal can be connected in the moving destination area to a slice to which the terminal was connected in the moving source area is triggered by movement of the terminal to the one area.

4. The slice management system according to claim 1, wherein an area in which the terminal is currently located is set as the moving source area, an area to which movement is predicted is set as the moving destination area, and determination of whether or not the terminal can be connected in the moving destination area to a slice to which the terminal was connected in the moving source area is triggered by prediction of movement of the terminal between areas based on at least one of location information, speed information, and acceleration information of the terminal.

5. The slice management system according to any one of claims 1 to 4,
wherein the slice information stored in the memory includes the number of terminals connected to a slice for each area, and
wherein the slice management system deletes a generated slice on the basis of the number of terminals included in the slice information stored in the memory.

6. The slice management system according to any one of claims 1 to 5, wherein, when a slice is generated in the moving destination area, the slice is generated only in a case in which it is determined that the generation of the slice can be executed on the basis of a resource status of the network infrastructure of the moving destination area.

7. A slice management method executed by a slice management system managing a slice that is a virtual network generated on a network infrastructure, the slice management method comprising:
a determination step of determining whether or not a terminal can, in a moving destination area that is a destination of movement of the terminal between areas, be connected to a slice to which the terminal was connected in a moving source area by referring to a memory storing slice information relating to a slice to which the terminal can be connected for each area; and
a generation step of generating the slice in the moving destination area such that the terminal can be connected to the slice in the moving destination area in a case in which it is determined that the connection cannot be made.
